# EUROPÄISCHE PATENTSCHRIFT

(11) **EP 2 025 595 B1**
(45) Veröffentlichungstag und Bekanntmachung des Hinweises auf die Patenterteilung: **29.02.2012**
(21) Anmeldenummer: 08159485.5
(22) Anmeldetag: 02.07.2008
(51) Int. Cl.: B64F 1/22

(54) **Schleppfahrzeug für Flugzeuge**
Tow vehicle for aircraft
Véhicule remorqueur pour avions

(30) Priorität: 05.07.2007 DE 102007032353; 05.07.2007 DE 202007009688 U
(43) Veröffentlichungstag der Anmeldung: 18.02.2009
(73) Patentinhaber: Flughafen Leipzig/Halle GmbH, 04435 Flughafen Leipzig/Halle (DE)
(72) Erfinder: Wenzel, Wolfgang, 04509 Wiedemar (DE)
(74) Vertreter: Kailuweit, Frank

(56) Entgegenhaltungen:
- DE-U1- 9 307 340
- US-A- 4 113 041
- US-A1- 2006 086 566
- BUSINESS EDITORS: 'Oshkosh Develops Next Generation of Aircraft Fire Fighting Truck; Called the Striker', [Online] 14 Juni 2001, Business Wire Gefunden im Internet: <URL:http://www.thefreelibrary.com/Oshkosh+ Develops+Next+Generation+of+Aircraft+Fire+F ighting+Truck%3B...-a075520435> [gefunden am 2010-03-21]
- FLUGHAFEN INNSBRUCK: 'Panther 6x6_CA5 Flughafenlöschfahrzeug', [Online] XPINT: FLUGHAFEN Gefunden im Internet: <URL:http://rosenbauer.t3.world-direct.at/f ileadmin/user_upload/Datenblatt_Panther_Inn sbruck.pdf> [gefunden am 2011-03-22]

## Beschreibung

Die Erfindung bezieht sich auf ein Schleppfahrzeug für Flugzeuge.

Auf modernen Flughäfen ist es in der Regel notwendig, dass die Flugzeuge sich rückwärts aus ihren Parkpositionen bewegen, da sie mit dem Bug in Richtung eines Gebäudes stehen. Gleiches gilt für Flugzeuge, die sich zu Reparatur- bzw. Wartungsarbeiten in einem Hangar befinden. Da die meisten Flugzeuge sich nicht aus eigener Kraft rückwärts bewegen können, kommen hierbei Schleppfahrzeuge zum Einsatz. Das Zurücksetzen eines Flugzeuges mittels eines Schleppfahrzeuges wird als Pushback bezeichnet.

Insbesondere beim Pushback von großen und schweren Flugzeugen treten hierbei Probleme auf. Durch das hohe Startgewicht und den dadurch bedingten hohen Rollwiderstand des Flugzeuges besteht ein hohes Risiko, dass die Räder des Schleppfahrzeuges durchdrehen und die Bodenhaftung verlieren. Diesem Problem kann zum einen durch ein stark erhöhtes Eigengewicht des Schleppfahrzeuges begegnet werden. Der daraus resultierende große konstruktive Aufwand führt jedoch zu sehr hohen Anschaffungskosten eines solchen Schleppfahrzeuges, gepaart mit permanent erhöhten Kraftstoffkosten.

In der EP 0 502 152 B1 wird eine weitere Möglichkeit zur Vergrößerung der Bodenhaftung des Schleppfahrzeuges während des Pushback-Vorganges vorgestellt. Dabei wird während des Pushback-Vorganges das Bugrad des zurückzusetzenden Flugzeuges angehoben. Dazu sind verschiedene mechanische Möglichkeiten bekannt. Diese haben jedoch alle gemeinsam den Nachteil, dass durch das Anheben des Bugrades ein erhöhtes Risiko zur Beschädigung des Reifens oder des Fahrwerkes besteht. Zudem weisen alle Lösungen eine sehr komplizierte Anhebe- Mechanik auf, wodurch auch diese Fahrzeuge sehr kostenintensiv sind.

Großraumflugzeuge vom Typ Antonov weisen zudem Zwillings-Bugfahrwerke auf, dass heißt zwei nebeneinander angeordnete Bugfahrwerke. Dadurch sind Flugzeuge dieses Typs für Schleppfahrzeuge, die das Bugrad umschließen bzw. anheben, ungeeignet. Flugzeuge dieses Typs können vielmehr ausschließlich mit einer speziell für diesen Flugzeugtyp ausgeführten Schleppstange zurückgesetzt werden. Konstruktive Änderungen an der Schleppstange sind aus sicherheitstechnischen Gründen unzulässig.

Große Flughäfen müssen, um Startverzögerungen im Falle des Defektes eines Schleppfahrzeuges zu vermeiden, redundant mehrere Schleppfahrzeuge vorhalten. Im Falle der sehr teuren Schleppfahrzeuge für Großraumflugzeuge stellt dies für die Flughäfen einen erheblichen Kostenfaktor dar, zumal die schweren Schleppfahrzeuge für Großraumflugzeuge mit ihren hohen Unterhaltungskosten für die Verwendung bei mittelgroßen oder kleinen Flugzeugtypen ungeeignet sind.

Aufgabe der vorliegenden Erfindung ist es, ein Schleppfahrzeug für Großraumflugzeuge mit einem Startgewicht von mehr als 350 t (Anspruch1) und eine Verwendung eines Feuerwehrlöschfahrzeuges (Anspruch 5) anzubieten.

Erfindungsgemäß ist das Schleppfahrzeug ein Feuerwehrlöschfahrzeug mit mindestens drei angetriebenen Achsen, von denen mindestens eine lenkbar ausgeführt ist, einem Löschtankvolumen von mindestens 10.000 1, einer Motorleistung von mindestens 600 kW, mit mindestens einem Rückwärtsgang und einem Gesamtgewicht von mindestens 35 t mit einer frontseitigen Anordnung zur Aufnahme der Schleppstange des Großraumflugzeuges. Vorzugsweise ist die Anordnung dabei lösbar mit dem Fahrzeugrahmen oder -hilfsrahmen verbunden.

Bei Flughafen-Feuerwehrlöschfahrzeugen ist der Wassertank aufgrund der permanenten Einsatzbereitschaft immer gefüllt. Aufgrund des somit hohen Eigengewichts in Zusammenhang mit dem Allradantrieb bestehen keine Traktionsprobleme beim Pushback eines Flugzeuges. Im Notfall kann das Feuerwehrlöschfahrzeug auch während des Pushbacks von der Schleppstange gelöst werden und steht dann sofort für einen möglichen Feuerwehreinsatz zur Verfügung.

Die Anordnung zur Aufnahme der Schleppstange befindet sich im Frontbereicht des Feuerwehrlöschfahrzeuges. Dadurch ist eine gute Einsichtnahme des Fahrzeugführers in Bewegungsrichtung gewährleistet. Dabei ist die Anordnung zur Aufnahme der Schleppstange zur Verbesserung der Manövrierbarkeit so positioniert, dass sich der Aufnahmepunkt der Schleppstange vorzugsweise in der Mitte der Fahrzeugfront befindet.

Zwar weisen einige Feuerwehrlöschfahrzeuge bereits werksseitig eine frontseitige, asymmetrisch angeordnete Abschleppöse auf. Der Zweck dieser Abschleppöse besteht jedoch darin, andere, beispielsweise festgefahrene Fahrzeuge herauszuziehen bzw. zu bewegen. Für einen Einsatz als Schleppfahrzeug für Großraumflugzeuge sind diese werksseitigen Abschleppösen mechanisch nicht ausgelegt. Zudem ist es nicht möglich, die Schleppstangen der Großraumflugzeuge an diesen werksseitigen Abschleppösen zu befestigen, da diese eine andere Form aufweisen.

Ein solches Feuerwehrlöschfahrzeug ist aus US 2006/086566 bekannt.

Vorzugsweise ist der Fahrersitz des Feuerwehrlöschfahrzeuges, bezogen auf die Fahrzeugfront, mittig angeordnet. Dies verbessert die Übersicht des Fahrzeugführers und erleichtert das Handling des geschleppten Flugzeuges beim Pushback.

Weiterhin vorteilhaft ist die Anordnung zur Aufnahme der Schleppstange mit mechanischen oder hydraulischen Mitteln höhenverstellbar. Dadurch ist die Aufnahme unterschiedlicher Schleppstangen unterschiedlicher Flugzeugtypen möglich.

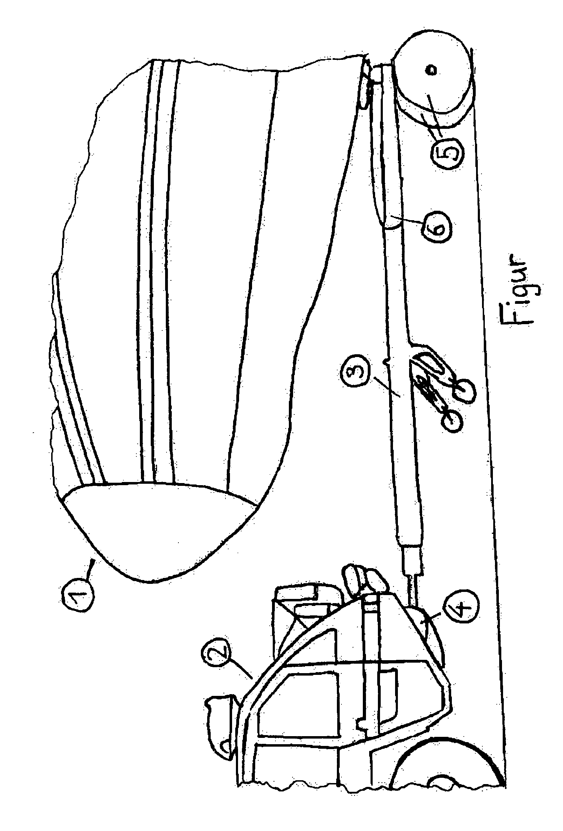

Im Folgenden wird ein Ausführungsbeispiel der Erfindung anhand einer Figur erläutert: Dabei zeigt die Figur ein Großraumflugzeug vom Typ Antonov 1 während des Pushbacks durch ein Feuerwehrlöschfahrzeug 2 mittels Schleppstange 3. Das Großraumflugzeug vom Typ Antonov 1 weist ein Zwillings-Bugfahrwerk 5 auf.

Das Großraumflugzeug vom Typ Antonov-124 1 wird dabei mittels einer Schleppstange 3 durch das Feuerwehrlöschfahrzeug als Schleppfahrzeug 2 geschleppt. Die Schleppstange 3 hat eine Gabelung 6, an welcher sich die Schleppstange in zwei Bereiche aufteilt, die am Zwillings-Bugfahrwerk 5 angreifen.

Das Schleppfahrzeug 2 ist ein vierachsiges Flughafen-Feuerwehrlöschfahrzeug mit Allradantrieb, ausgerüstet mit einem V12 Dieselmotor mit einer Motorleistung von 735 kW. Die beiden vorderen Achsen sind lenkbar ausgeführt. Der Löschwassertank des Flughafen-Feuerwehrlöschfahrzeuges hat ein Volumen von 14.000 Litern. Das Gesamtgewicht des Fahrzeuges beträgt ca. 38 Tonnen.

Das Feuerwehrlöschfahrzeug 2 ist werksseitig mit einer frontseitigen Abschleppöse ausgerüstet. Die werksseitige Abschleppöse ist seitlich mit dem Fahrzeugrahmen verbunden. Für den Einsatz als Schleppfahrzeug wurde die werksseitige Abschleppöse entfernt und an den Aufnahmepunkten des Fahrzeugrahmens eine Anordnung zur Aufnahme 4 der Schleppstange 3 lösbar befestigt.

Die Anordnung zur Aufnahme 4 der Schleppstange 3 ist aus Stahl gefertigt und besteht aus einem Träger zwischen den Befestigungspunkten am Fahrzeugrahmen, an welchem mittig das Kupplungssteil zur Aufnahme des Auges der Schleppstange 3 befestigt ist.

Der Rollwiderstand eines Großraumflugzeuges 1 mit einem Gewicht von 400 t beträgt ca. 40 kN. Die Rollfelder von Flughäfen weisen in der Regel eine Neigung von 1% auf, um das Ablaufen von Regenwasser zu gewährleisten. Aus dieser Steigung resultiert bei einem Gewicht von 400 t ein zusätzlicher Steigungswiderstand von 40 kN. Das Flughafen-Feuerwehrlöschfahrzeug 2 mit einer Motorleistung von ca. 735 kW hat eine maximale Zugkraft von ca. 200 kN. Demnach ist die Antriebsleistung des Flughafen-Feuerwehrlöschfahrzeuges 2 vollkommen ausreichend, da noch mindestens 120 kN für die Beschleunigung von Feuerwehrlöschfahrzeug 2 und Großraumflugzeug 1 verbleiben.

In Tests wurden Flugzeuge des Typs Antonov-124 mit einem Startgewicht von 400 t ca. 350 m weit sowohl vorwärts als auch rückwärts problemlos bewegt.

### Bezugszeichenliste:

- 1: Großraumflugzeug Antonov-124
- 2: Feuerwehrlöschfahrzeug
- 3: Schleppstange
- 4: Anordnung zur Aufnahme der Schleppstange
- 5: Zwillings-Bugfahrwerk
- 6: Gabelung

## Patentansprüche

1. Feuerwehrlöschfahrzeug (2) als Schleppfahrzeug für den Pushback schwerer Großraumflugzeuge mit einem Startgewicht von mindestens 350 t mittels Schleppstange (3), mit mindestens drei angetriebenen Achsen, von denen mindestens eine Achse lenkbar ausgeführt ist, mit einem Löschtankvolumen von mindestens 10.000 Litern, einer Motorleistung von mindestens 600 kW, mit mindestens einem Rückwärtsgang und einem Eigengesamtgewicht von mindestens 35 t, wobei das Feuerwehrlöschfahrzeug in Fahrtrichtung an seiner Vorderseite eine mittig angeordneten Anordnung (4) zur Aufnahme einer Schleppstange eines Großraumflugzeuges aufweist.

2. Feuerwehrlöschfahrzeug als Schleppfahrzeug nach Anspruch 1, **dadurch gekennzeichnet, dass** der Fahrersitz mittig bezogen auf die Fahrzeugbreite angeordnet ist.

3. Feuerwehrlöschfahrzeug als Schleppfahrzeug nach einem der vorigen Ansprüche, **dadurch gekennzeichnet, dass** die Anordnung (4) zur Aufnahme der Schleppstange lösbar mit dem Rahmen des Feuerwehrlöschfahrzeuges (2) verbunden ist.

4. Feuerwehrlöschfahrzeug als Schleppfahrzeug nach einem der vorigen Ansprüche, **dadurch gekennzeichnet, dass** die Anordnung (4) zur Aufnahme der Schleppstange mit mechanischen oder hydraulischen Mitteln höhenverstellbar ist.

5. Verwendung eines Feuerwehrlöschfahrzeuges (2) mit mindestens drei angetriebenen Achsen, von denen mindestens eine Achse lenkbar ausgeführt ist, mit einem Löschtankvolumen von mindestens 10.000 Litern, einer Motorleistung von mindestens 600 kW, mindestens einem Rückwärtsgang, einem Eigengesamtgewicht von mindestens 35 t und einer frontseitig mittig angerordneten Anordnung (4) zur Aufnahme einer Schleppstange eines Großraumflugzeuges als Schleppfahrzeug für einen Flugzeug-Pushback von schweren Großraumflugzeugen mit einem Startgewicht von mindestens 350 t mittels Schleppstange.

## Claims

1. Fire engine (2) as tow vehicle for the pushback of heavy wide-bodied aircraft with a take-off mass of at least 350 t by means of a towbar (3), the fire engine (2) having at least three driven axles, with at least one axle thereof established steerable, with an extinguishing water tank volume of at least 10,000 1, with a power rating of at least 600 kW, with at least one reverse gear and a total service weight of at least 35 t, whereby the fire engine at its front side, in direction of drive, is provided with a centrally arranged equipment (4) to accept a towbar of a wide-bodied aircraft.

2. Fire engine (2) as tow vehicle to claim 1 **characterized by** that the driver's seat is placed centrally with respect to the width of the vehicle.

3. Fire engine (2) as tow vehicle to any of the previous claims **characterized by** that the equipment (4) to accept the towbar is detachably connected to the frame of the fire engine (2).

4. Fire engine (2) as tow vehicle to any of the previous claims **characterized by** that the equipment (4) to accept the towbar is height-adjustable by mechanical or hydraulic means.

5. Use of a fire engine (2) having at least three driven axles, with at least one axle thereof established steerable, with an extinguishing water tank volume of at least 10,000 1, with a power rating of at least 600 kW, with at least one reverse gear, with a total service weight of at least 35 t and with an equipment (4) centrally arranged at the front side to accept a towbar of a wide-bodied aircraft, as tow vehicle for an aircraft pushback of heavy wide-bodied aircraft with a take-off mass of at least 350 t by means of a towbar.

## Revendications

1. Véhicule d'extinction d'incendies (2) comme véhicule remorqueur pour refouler au moyen d'une barre de remorquage (3) des avions lourds de grande capacité ayant un poids au décollage d'au moins 350 t, avec au moins trois essieux moteurs parmi lesquels au moins un essieu est réalisé directeur, avec un volume du réservoir d'extinction d'au moins 10 000 litres, avec une puissance du moteur d'au moins 600 kW, avec au moins une marche arrière et avec un poids total à vide d'au moins 35 t, le véhicule d'extinction d'incendies présentant, sur son côté avant dans la direction de marche, un dispositif (4) disposé centralement pour recevoir une barre de remorquage d'un avion de grande capacité.

2. Véhicule d'extinction d'incendies comme véhicule remorqueur selon la revendication 1, **caractérisé en ce que** le siège du conducteur est disposé centralement relativement à la largeur du véhicule.

3. Véhicule d'extinction d'incendies comme véhicule remorqueur selon l'une des revendications précédentes, **caractérisé en ce que** le dispositif (4) pour recevoir la barre de remorquage est relié de manière amovible au châssis du véhicule d'extinction d'incendies (2).

4. Véhicule d'extinction d'incendies comme véhicule remorqueur selon l'une des revendications précédentes, **caractérisé en ce que** le dispositif (4) pour recevoir la barre de remorquage peut être réglé en hauteur par des moyens mécaniques ou hydrauliques.

5. Utilisation d'un véhicule d'extinction d'incendies (2) avec au moins trois essieux moteurs parmi lesquels au moins un essieu est réalisé directeur, avec un volume du réservoir d'extinction d'au moins 10 000 litres, avec une puissance du moteur d'au moins 600 kW, avec au moins une marche arrière, avec un poids total à vide d'au moins 35 t et avec un dispositif (4) disposé centralement sur le côté avant pour recevoir une barre de remorquage d'un avion de grande capacité, comme véhicule remorqueur pour refouler au moyen d'une barre de remorquage des avions lourds de grande capacité ayant un poids au décollage d'au moins 350 t.
